# EUROPEAN PATENT SPECIFICATION

(11) **EP 1 798 878 B1**
(45) Date of publication and mention of the grant of the patent: **28.03.2018**
(21) Application number: 06022729.5
(22) Date of filing: 31.10.2006
(51) Int. Cl.: H04H 60/27

(54) **Method and mobile communication terminal for storing broadcasting program**
Verfahren und mobiles Kommunikationsendgerät zum Speichern von Rundfunkprogrammen
Procédé et terminal de télécommunication mobile pour le stockeage des programmes radiodiffusés

(30) Priority: 31.10.2005 KR 20050103153
(43) Date of publication of application: 20.06.2007
(73) Proprietor: LG Electronics Inc., Yeongdeungpo-gu Seoul 150-721 (KR)
(72) Inventor: Kim, Ji Tae, Junggye-dong Nowon-gu Seoul (KR)
(74) Representative: Katérle, Axel

(56) References cited:
- EP-A- 1 239 674
- EP-A- 1 309 195
- EP-A2- 1 292 135
- US-A1- 2004 109 672

## Description

### BACKGROUND OF THE INVENTION

### Field of the Invention

The present invention relates to a mobile communication terminal with a broadcasting receiving function, and more particularly, to a method of storing broadcasting programs in a mobile communication terminal and a mobile communication terminal using the same.

### Discussion of the Related Art

A mobile communication terminal with a broadcasting receiving function according to the related art will be described as follows.

The mobile communication terminal according to the related art performs the recording of a broadcasting program received at a specific time when a user selects a recording function. The recording function may be set before the reception of the broadcasting program to be recorded or during the reception of the broadcasting program.

In order to view the recorded broadcasting program, the user stops playing the broadcasting program currently being received and then manipulate keys to play the recorded broadcasting program.

That is, according to the related art, in order to view the recorded broadcasting program, the user must stop the presently received broadcasting program and select the stored program using complicated key/menu manipulation, which is complicated and inconvenient to the user.

Moreover, according to the related art, when recording the broadcasting program, how to use a memory space to efficiently store and to easily search the recorded broadcasting program is never considered.

EP 1 309 195 A relates to a set-top box and a method thereof for receiving and recording a digital broadcast program and reproducing a recorded digital broadcast program with time-based playback features. EP 1 292 135 A2 relates to a program record and playback system with a reception device, a record and playback device, and a control device, which controls reception, recording and playback of a broadcast program.

### SUMMARY OF THE INVENTION

Accordingly, the present invention is directed to a method of recording a broadcasting program and a mobile communication terminal using the same that substantially obviate one or more problems due to limitations and disadvantages of the related art.

An object of the present invention is to provide a method of reproducing a stored or recorded broadcasting program while playing a presently broadcasting program and a mobile communication terminal using the same. The method and the mobile terminal are defined in the independent claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a block diagram of a mobile communication terminal with a broadcasting program storing function according to an embodiment of the present invention;
FIG. 2 illustrates a flowchart of a method of a mobile communication terminal of storing and reproducing a broadcasting program according to an embodiment of the present invention;
FIG. 3 illustrates an architecture of overall memory having a plurality of storing spaces according to an embodiment of the present invention;
FIG. 4 illustrates an example of a broadcasting stream stored in one time section according to the present invention; and
FIG. 5 illustrates an example of a search and reproduction operation of a broadcasting stream in a time shifting mode according to the present invention.

### DETAILED DESCRIPTION OF THE PREFERRED EMBODIMENTS

Reference will now be made in detail to the preferred embodiments of the present invention, examples of which are illustrated in the accompanying drawings. Moreover, in the following description of the present invention, if the detailed description of the already known structure and operation may confuse the subject matter of the present invention, the detailed description thereof will be omitted.

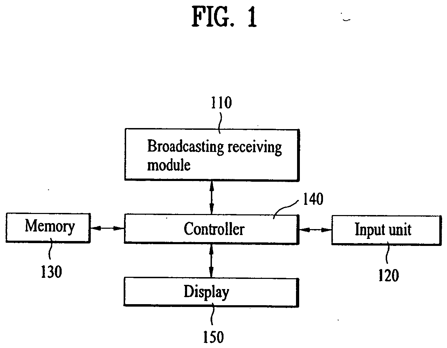

Referring to FIG. 1, a mobile communication terminal with a broadcasting program storing function according to an embodiment of the present invention will be described in detail as follows.

As shown in FIG. 1, the mobile communication terminal includes a broadcasting receiving module 110, an input unit 120, a memory 130, a controller 140, and a display 150. The mobile communication terminal includes or can include other components provided in related art communication terminals, such as a speaker, etc. All components of the mobile communication terminal are operatively configured and coupled.

The broadcasting receiving module 110 receives broadcasting programs and data relating to the broadcasting program through a broadcasting network. Generally, the broadcasting network is a broadcasting network based on a digital broadcasting standard such as a digital multimedia broadcasting (DMB), a digital video broadcasting-handheld (DVBH), a media forward link only (FLO), and the like.

Moreover, the broadcasting receiving module 110 receives stream type broadcasting programs and other data.

The input unit 120 generates a signal corresponding to an input action of a user.

The memory (or other storage unit) 130 stores all data inputted to and outputted from the mobile communication terminal and stores a variety of broadcasting programs to implement functions and operations of the mobile communication terminal.

Particularly, in the present invention, the memory 130 allocates (or assigns) a broadcasting stream received through the broadcasting receiving module 110 to at least one time section among a plurality of time sections, and stores the received broadcasting stream in the allocated at least one time section in the memory 130. For instance, the memory 130, under control of the controller, simultaneously or almost simultaneously assigns and stores the broadcasting streams currently being received (e.g., via an antenna or being uploaded) to the time sections in sequence. The information associating the time section (e.g., index) and the broadcasting stream(s) stored therein is stored in the memory 130. Also, the locations of the time sections are stored for accessing the time sections subsequently. As a result, storing of the currently received broadcasting streams in the sections can occur while the currently received broadcasting streams are being played on the terminal.

The plurality of time sections are created by storing spaces divided from an overall storing space of the memory 130 (or part thereof) according to a predetermined basis.

For example, the memory 130 allocates and stores therein the received broadcasting stream to and in the time sections at uniform time intervals. In another example, the memory 130 allocates and stores therein the received broadcasting stream to and in the time sections at an interval of a uniform frame number. In this case, in the plural time sections, an index to distinguish the respective time sections may be set.

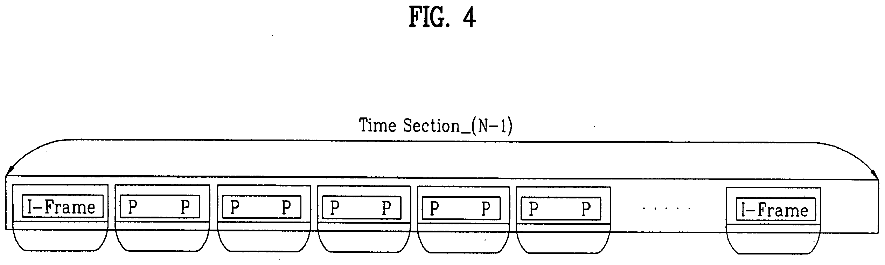

Moreover, the broadcasting stream allocated in the time sections includes a plurality of frames. In this case, in the plural frames allocated in a certain time section, as shown in FIG. 4, first and final frames are intra-coded images-frames (I-frames) and other frames are predictive-coded images-frames (P-frames).

Particularly, in the present invention, the input unit 110 may generate a setting signal of a time shifting mode, e.g., according to the user's input. Here, the time shifting mode is a mode to search or reproduce a past broadcasting stream while viewing a present broadcasting program. Thus, the controller 140, according to the setting signal, sets the time shifting mode to the mobile communication terminal to perform an operation according to the time shifting mode.

Moreover, the input unit 110 may generate a selecting signal with respect to at least one time section of the plural time sections. In this case, the display 150 displays information about the respective plural time sections, and the user can select the time section to which a broadcasting stream to be reproduced is allocated with reference to the information displayed on the display 150. The information may be a frame positioned at the first place of the respective time sections or a receiving time of the broadcasting stream stored in the respective time sections.

For example, the user can select a desired time section using a 'rewind' key (or other designated key) provided in the input unit 110. If the 'rewind' key is pressed for a predetermined time period or more, the input unit 110 generates a selecting signal to select a first time section in which the broadcasting stream is firstly stored. In another example, when the 'rewind' key is pressed once, the input unit 110 generates a selecting signal to select a time section in which the broadcasting stream is stored most recently. In another example, when the 'rewind' key is pressed three times sequentially, the input unit 110 generates a selecting signal to select a time section in which the third most recent broadcasting stream is stored. Other examples are possible.

Moreover, the input unit 110 may generate a selecting signal to select another time section or a reproducing signal to reproduce a presently received broadcasting stream when the stored broadcasting stream is reproduced.

For example, the user can select another desired time section using a 'fast forward' key (or other designated key) provided in the input unit 110. When the 'fast forward' key is pressed for a predetermined time period or more, the input unit 110 generates a selecting signal to select a time section in which the broadcasting stream is stored most recently. In another example, when the 'fast forward' key is pressed once, the input unit 110 generates a selecting signal to select a time section next to a time section in which a presently reproducing broadcasting stream is stored. In another example, when the 'fast forward' key is pressed three times, the input unit 110 generates a selecting signal to select a time section positioned at the third position from the time section in which the presently reproducing broadcasting stream is stored.

Moreover, the user can select a reproduction of a presently received broadcasting stream using a 'play' key (or other designed key) provided in the input unit 110. In other words, when the 'play' key is pressed, the input unit 110 generates a reproducing signal to reproduce the presently received broadcasting stream. So by a single action of selecting the 'play' key in the time shift mode, the switch to playing the currently received broadcasting stream from playing a stored broadcasting stream can occur, which is convenient to the user.

Additionally, the input unit 110 may generate a selecting signal to select a time section of the plural time sections to be repeatedly reproduced. In this case, the repeatedly reproducing time section may be selected in a storing unit or in the frame unit of the broadcasting stream.

The controller 140 controls the overall operation of the mobile communication terminal.

Particularly, in the present invention, before storing the received broadcasting stream, the controller 140 determines whether or not there is a storing space in the memory 130 where the received broadcasting stream can be stored. If it is determined there is no storing space, the controller 140 deletes at least one time section of the plural time sections in the order of time when the broadcasting stream is stored, so as to create the storing space in the memory 130.

Moreover, in the present invention, the controller 140 reproduces the broadcasting stream allocated in the time section selected according to the selecting signal generated by the input unit 110.

For example, when reproducing the stored broadcasting stream, the controller 140 can reproduce the broadcasting stream allocated to the selected time section and a broadcasting stream next to the broadcasting stream allocated to the selected time section and allocated to the next time section.

Moreover, when receiving a reproduction stopping signal from the user or when the presently reproducing broadcasting stream is synchronized with the presently received broadcasting stream, the controller 140 can stop the reproduction of the stored broadcasting stream. When the reproduction of the stored broadcasting stream is stopped, the controller 140 can reproduce the presently received broadcasting stream according to the user's choice.

For example, the controller 140 determines whether or not a frame of the presently reproducing stored broadcasting stream is a frame last stored in the memory 130. If, as a result of this determination, the last stored frame is determined, the controller 140 determines that the frame of the presently reproducing stored broadcasting frame is synchronized with the frame of the presently received broadcasting stream. The controller 140 reproduces the frame of the presently received broadcasting stream.

The display 150 displays a status of the mobile communication terminal and a variety of information stored in the mobile communication terminal. Particularly, in the present invention, the display 150 displays the presently received broadcasting stream or the stored broadcasting stream allocated to the selected time section according to a control signal from the controller 140.

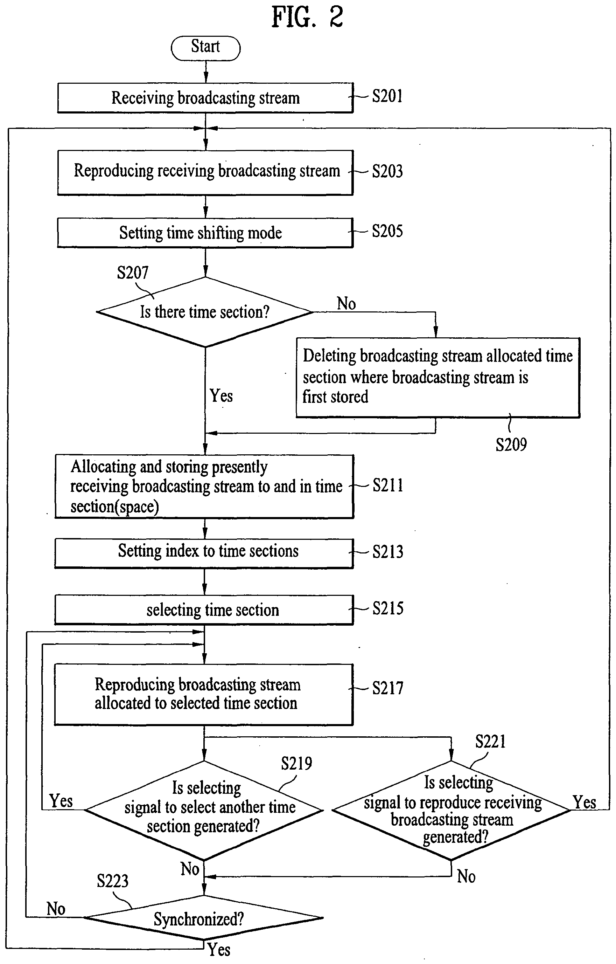

Referring to FIG. 2, the broadcasting program storing method of a mobile communication terminal according to the present invention will be described in detail as follows. This method is implemented by the terminal of FIG. 1, but can be implemented in other suitable devices.

Referring to FIG. 1, the mobile communication terminal receives a stream type broadcasting program through a broadcasting network (S201). In this case, the broadcasting program may include a broadcasting stream transmitted in real time.

Here, the broadcasting network is a broadcasting network based on a digital broadcasting standard such as a digital multimedia broadcasting (DMB), a digital video broadcasting-handheld (DVBH), a media forward link only (FLO), and the like.

The mobile communication terminal reproduces the received broadcasting stream (S203). Thus, the mobile communication terminal displays the presently received broadcasting stream.

The mobile communication terminal sets a time shifting mode (S205). Generally, the time shifting mode may be set according to a user's choice.

As the time shifting mode is set, the mobile communication terminal sets a state to perform the operation corresponding to the setting.

The mobile communication terminal, in the time shifting mode, determines whether there is a space (time section) to store the presently received broadcasting stream in the storing space of the mobile communication terminal (S207).

If it is determined there is no storing space (time section) as a result of the checking, the mobile communication terminal eliminates the broadcasting stream allocated to at least one time section from the memory in the order of storing time (S209). For example, the mobile communication terminal can delete at least one time section of the plural time sections of its memory in the order of time when the broadcasting stream is stored, so as to create a storing space.

If there is a storing space as a result of the determination at step S207 (or because the space has been created as a result of step S209), the mobile communication terminal allocates and stores the received broadcasting stream to and in at least one available time section of the plural time sections in the memory (S211). Here, the plural time sections mean storing spaces divided from an overall storing space of the mobile communication terminal according to a predetermined basis.

For example, the mobile communication terminal allocates and stores the received broadcasting stream to and in a desired time section at a uniform time interval. In another example, the mobile communication terminal allocates and stores the received broadcasting stream to and in the time sections at an interval of a uniform frame number. In this case, in the plural time sections, an index to distinguish the respective time sections may be set (S213). Thus, the user can easily search and select the time sections using the set indices.

In the present example, the broadcasting stream allocated in the time sections includes a plurality of frames. For example, in the plural frames allocated in a certain time section, as shown in FIG. 4, first and final frames are intra-coded images-frames (I-frames) and other frames are predictive-coded images-frames (P-frames). The mobile communication terminal selects at least one time section from the plural time sections (S215).

For example, when information about the respective plural time sections is displayed, the user can select the time section to which the broadcasting stream to be reproduced is allocated with reference to the displayed information.

Then the mobile communication terminal reproduces the broadcasting stream allocated to the selected time section from the memory (S217). The mobile communication terminal displays the reproducing broadcasting stream on its display.

For example, when reproducing the stored broadcasting stream, the mobile communication terminal can reproduce the broadcasting stream allocated to the selected time section from the memory, and a broadcasting stream next to the broadcasting stream allocated to the selected time section and allocated to the next time section.

The mobile communication terminal determines whether or not a selecting signal to select another time section is generated (e.g., is there a selection of another time section), during the performance of the step S217 or thereafter (S219).

If it is determined at step S219 the selecting signal is generated, the mobile communication terminal reproduces the broadcasting stream allocated to the time section selected in step S219 (S217).

On the other hand, if it is determined at step S219 the selecting signal is not generated, the mobile communication terminal determines whether the presently reproducing stored broadcasting stream is synchronized with the currently received broadcasting stream (S223). If so, the method returns to step S203.

The mobile communication terminal determines whether a reproducing signal of the currently received broadcasting stream is generated or not during or after the performance of step S217 (S221). As a result of this determination, if the reproducing signal is generated, the mobile communication terminal stops the reproduction of the stored broadcasting stream allocated to a desired time section, and reproduces the presently received broadcasting stream (S203).

On the other hand, if step S221 determines that the reproducing signal is not generated, the mobile communication terminal determines whether the presently reproducing stored broadcasting stream is synchronized with the presently received broadcasting stream (S223).

For example, the mobile communication terminal determines whether a frame of the presently reproducing stored broadcasting stream is a last stored frame or not. If it is, the mobile communication terminal can determine that the frame of the presently reproducing broadcasting frame is synchronized with the frame of the received broadcasting stream.

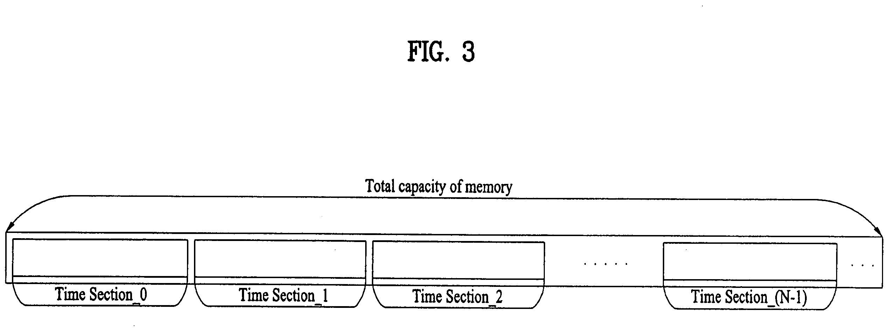

Referring to FIG. 3, a total capacity of the memory 130 including the plural time sections according to the present invention will be described as follows.

As shown in FIG. 3, the total capacity of the memory 130 is divided into the plural time sections Time Section_0, Time Section_1, Time Section_2, ..., and Time Section_(N-1) for the management thereof. Thus, the received broadcasting stream is stored in at least one time section of the plural time sections sequentially in the order of the broadcasting streams are received.

The total capacity of the memory 130 is divided into the plural time sections at a predetermined time interval or by a predetermined number of frames.

For example, when the total capacity of the memory 130 is full, a broadcasting stream allocated to the first positioned time section Time Section_0 is firstly deleted, and after that, following broadcasting streams are deleted sequentially, so as to create a memory space.

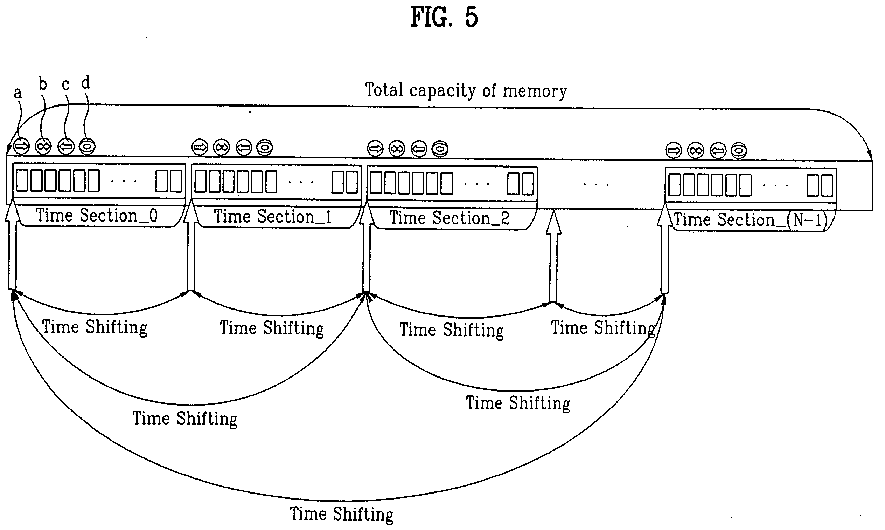

Referring to FIG. 5, the searching and reproducing of the broadcasting stream according to the time shifting mode of the mobile communication terminal will be described in detail as follows.

As shown in FIG. 5, in this example, the total capacity of the memory 130 is divided into the plural time sections Time Section_0, Time Section_1, Time Section_2, ..., and Time Section_(N-1) where N is a positive integer, for the management thereof.

When the time shifting mode is set to the mobile communication terminal, the user selects at least one from a 'play' key a, a 'fast forward' key b, a 'rewind' key c, and a 'repeat' key d (of the input unit 120) to select a broadcasting stream to be reproduced. In this case, the mobile communication terminal includes a user interface to receive a selection choice of the 'play' key a, the 'fast forward' key b, the 'rewind' key c, and the 'repeat' key d from the user.

When the 'rewind' key c is selected during the reproduction of the currently received broadcasting stream, the mobile communication terminal reproduces a stored broadcasting stream allocated to a certain time section of the plural time sections from the memory 130.

For example, when the 'rewind' key c is pressed for a predetermined time period or more, the mobile communication terminal reproduces broadcasting stream(s) allocated and stored to the respective time sections from Time Section_0 in which the broadcasting stream is stored first to the following time sections Time section_1, Time Sectin_2,... in sequence. In another example, when the 'rewind' key c is pressed once, the broadcasting stream allocated to the time section Time Section_(N-1) in which the broadcasting stream is stored most recently is reproduced. That is, the 'rewind' key c allows a user to select and play a time section that is first stored, most recently stored, or any particular time section.

If the 'play' key a is selected during the reproduction of the broadcasting stream allocated to a certain time section, the mobile communication terminal stops the reproduction of the stored broadcasting stream and reproduces the presently received broadcasting stream.

If the 'fast forward' key b is selected while reproducing a broadcasting stream allocated to a certain time section, the mobile communication terminal reproduces a broadcasting stream allocated to a time section positioned after the present time section. For example, when the 'fast forward' key b is pressed for a predetermined time period or more, the mobile communication terminal reproduces a broadcasting stream allocated to the time section Time Section_0 in which the broadcasting stream is first stored. If the 'fast forward' key b is pressed once, the mobile communication terminal generates a selecting signal to select a time section immediately next to the time section to which the present reproducing stored broadcasting stream is allocated. For instance, using the 'fast forward' key b, the user can jump from one time section to another time section for playing.

If the 'repeat' key d is selected while reproducing a broadcasting stream allocated to a certain time section, the mobile communication terminal may repeatedly reproduce the same broadcasting stream(s) in a predetermined number of the time sections.

For example, if the 'repeat' key d is pressed once at a starting point of a time section to be repeated and the 'repeat' key d is pressed once again at an ending point of the time section to be repeated, the broadcasting stream(s) corresponding to the selected time section(s) can be repeatedly reproduced. The selecting of the 'repeat' key d to set the start and end points of the broadcasting stream(s) in the time section(s) to be repeated, can be made while the stored broadcasting stream(s) are played under the use of the keys b and c.

Accordingly, using the keys a-d in the time shifting mode, the user can jump to and from any time section for search and reproduction.

Although the keys a-d in FIG. 5 have been used, other keys can be designated to carry out the time shifting mode of the mobile communication terminal. Also, other keys may be used in conjunction with the keys a-d to carry out the time shifting mode of the mobile communication terminal. The mobile communication terminal can be a mobile/cellular phone, a smart phone, a PDA, etc.

According to the present invention, a broadcasting stream is stored in real time simultaneously with viewing the broadcasting stream, which can be reproduced at any desired time.

Moreover, according to the present invention, since a total capacity of the memory is divided into the plural time sections for the management thereof, the capacity of the memory can be effectively managed.

Additionally, according to the present invention, since the index is set in the plural time sections to distinguish the respective time sections, a time section to be reproduced can be easily selected.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A broadcasting program playing method for a mobile communication terminal, said method comprising:
receiving (S201), by the mobile communication terminal, data including a broadcasting program in real time and storing (S207, S209, S211) the broadcasting program;
setting (S205) the mobile communication terminal to operate in a time shifting mode;
reproducing (S217), in the time shifting mode, the broadcasting program stored in the mobile communication terminal; ,
switching (S221), in response to a selecting signal input in the time shifting mode, the reproducing of the stored broadcasting program to playing of the real-time received broadcasting program; and **characterized in** further comprising:
determining (S223) whether the stored broadcasting program currently being reproduced is synchronized with the real-time received broadcasting program, and
if it is determined that the stored broadcasting program currently being reproduced is synchronized with the real-time received broadcasting program, reproducing the real-time received broadcasting program, and
if it is determined that the stored broadcasting program currently being reproduced is not synchronized with the real-time received broadcasting program, reproducing the stored broadcasting program,
wherein the synchronization is determined by whether a frame of the stored broadcasting program currently being reproduced is a frame last stored in the mobile communication terminal.

2. The method of any preceding claim, further comprising:
repeatedly reproducing, in response to a repeat instruction input during the reproducing of the stored broadcasting program, a section of the stored broadcasting program.

3. The method of claim 2, wherein the repeat instruction comprises selecting a start point and an end point of the section of the stored broadcasting program to be repeated.

4. The method of any preceding claim, wherein the received broadcasting program is stored (S211) into a plurality of storage sections provided in the mobile communication terminal.

5. The method of claim 4, further comprising:
providing (S213) indexes associating the storage sections with the broadcasting program stored therein.

6. The method of claim 5, further comprising:
displaying information about the plurality of storage sections having the broadcasting program stored therein.

7. The method of claim 6, further comprising:
selecting (S215) a storage section and jumping (S217) to it to reproduce the broadcasting program stored therein.

8. A mobile communication terminal comprising:
a broadcasting receiving module (110) adapted to receive data including a broadcasting program in real time;
a storage means (130) adapted to store the real-time received broadcasting stream;
an input unit (120) adapted to generate a setting signal for setting the mobile communication terminal into a time shifting mode and at least one selecting signal for selecting a section of the stored broadcasting program to be reproduced;
a controller (140) for setting the mobile communication terminal into the time shifting mode according to the setting signal, and the controller is further adapted to switch, in response to a selecting signal generated by the input unit (120), the reproducing of the stored broadcasting program to playing of the real-time received broadcasting program;
a display means (150) adapted to reproduce the broadcasting program stored in the mobile communication terminal; and
**characterized in that** the controller (140) is further adapted to determine whether the stored broadcasting program currently being reproduced is synchronized with the real-time received broadcasting program, and
if it is determined that the stored broadcasting program currently being reproduced is synchronized with the real-time received broadcasting program, reproduce the real-time received broadcasting program, and
if it is determined that the stored broadcasting program currently being reproduced is not synchronized with the real-time received broadcasting program, reproduce the stored broadcasting program,
wherein the synchronization is determined by whether a frame of the stored broadcasting program currently being reproduced is a frame last stored in the mobile communication terminal.

## Patentansprüche

1. Verfahren zum Abspielen eines Rundfunkprogramms für ein mobiles Kommunikationsendgerät, wobei das Verfahren umfasst:
Empfangen (S201), durch das mobile Kommunikationsendgerät, von Daten mit einem Rundfunkprogramm in Echtzeit und Speichern (S207, S209, S211) des Rundfunkprogramms;
Einstellen (S205) des mobilen Kommunikationsendgeräts, um in einem Zeitverschiebungsmodus zu arbeiten;
Wiedergeben (S217), in dem Zeitverschiebungsmodus, des in dem mobilen Kommunikationsendgerät gespeicherten Rundfunkprogramms;
Umschalten (S221) des Wiedergebens des gespeicherten Rundfunkprogramms als Reaktion auf ein im Zeitverschiebungsmodus eingegebenes Auswahlsignal, zum Abspielen des in Echtzeit empfangenen Rundfunkprogramms; und **dadurch gekennzeichnet, dass** es ferner umfasst:
Bestimmen (S223), ob das gerade wiedergegebene gespeicherte Rundfunkprogramm mit dem in Echtzeit empfangenen Rundfunkprogramm synchronisiert ist, und
wenn festgestellt ist, dass das gerade wiedergegebene gespeicherte Rundfunkprogramm mit dem in Echtzeit empfangenen Rundfunkprogramm synchronisiert ist, Wiedergeben des in Echtzeit empfangenen Rundfunkprogramms, und
wenn festgestellt ist, dass das gerade wiedergegebene gespeicherte Rundfunkprogramm nicht mit dem in Echtzeit empfangenen Rundfunkprogramm synchronisiert ist, Wiedergeben des gespeicherten Rundfunkprogramms,
wobei die Synchronisation dadurch bestimmt ist, ob ein Frame des gerade wiedergegebenen gespeicherten Rundfunkprogramms ein Frame ist, der zuletzt in dem mobilen Kommunikationsendgerät gespeichert wurde.

2. Verfahren nach Anspruch 1, ferner umfassend:
wiederholtes Wiedergeben eines Abschnitts des gespeicherten Rundfunkprogramms in Reaktion auf eine wiederholte Befehlseingabe während der Wiedergabe des gespeicherten Rundfunkprogramms.

3. Verfahren nach Anspruch 2, wobei der Wiederholungsbefehl umfasst Auswählen eines Startpunkts und eines Endpunkts des zu wiederholenden Abschnitts des gespeicherten Rundfunkprogramms.

4. Verfahren nach einem der vorhergehenden Ansprüche, wobei das empfangene Rundfunkprogramm in einer Vielzahl von Speicherabschnitten gespeichert ist (S211), die in dem mobilen Kommunikationsendgerät bereitgestellt sind.

5. Verfahren nach Anspruch 4, ferner umfassend:
Bereitstellen (S213) von Indizes, die die Speicherabschnitte mit dem darin gespeicherten Rundfunkprogramm assoziieren.

6. Verfahren nach Anspruch 5, ferner umfassend:
Anzeigen von Informationen über die Vielzahl von Speicherabschnitten, in denen das Rundfunkprogramm gespeichert ist.

7. Verfahren nach Anspruch 6, ferner umfassend:
Auswählen (S215) eines Speicherabschnitts und Springen (S217) zu diesem, um das darin gespeicherte Rundfunkprogramm wiederzugeben.

8. Mobiles Kommunikationsendgerät, umfassend:
ein Rundfunkempfangsmodul (110), das ausgebildet ist, Daten umfassend ein Rundfunkprogramm in Echtzeit zu empfangen;
einen Speicher (130), der ausgebildet ist, den in Echtzeit empfangenen Rundfunkstrom zu speichern;
eine Eingabeeinheit (120), die ausgebildet ist, ein Einstellsignal zum Einstellen des mobilen Kommunikationsendgeräts in einen Zeitverschiebungsmodus und mindestens ein Auswahlsignal zum Auswählen eines Abschnitts des wiederzugebenden gespeicherten Rundfunkprogramms zu erzeugen;
eine Steuerung (140) zum Einstellen des mobilen Kommunikationsendgeräts in den Zeitverschiebungsmodus gemäß dem Einstellsignal, wobei die Steuerung ferner ausgebildet ist, als Reaktion auf ein von der Eingabeeinheit (120) erzeugtes Auswahlsignal, das Wiedergeben des gespeicherten Rundfunkprogramms zum Abspielen des in Echtzeit empfangenen Rundfunkprogramms zu schalten;
eine Anzeige (150), die ausgebildet ist, das in dem mobilen Kommunikationsendgerät gespeicherte Rundfunkprogramm wiederzugeben; und
**dadurch gekennzeichnet, dass** die Steuerung (140) ferner ausgebildet ist, zu bestimmen, ob das gerade wiedergegebene gespeicherte Rundfunkprogramm mit dem in Echtzeit empfangenen Rundfunkprogramm synchronisiert ist, und
wenn festgestellt ist, dass das gerade wiedergegebene gespeicherte Rundfunkprogramm mit dem in Echtzeit empfangenen Rundfunkprogramm synchronisiert ist, Wiedergeben des in Echtzeit empfangenen Rundfunkprogramms, und
wenn festgestellt ist, dass das gerade wiedergegebene gespeicherte Rundfunkprogramm nicht mit dem in Echtzeit empfangenen Rundfunkprogramm synchronisiert ist, Wiedergeben des gespeicherten Rundfunkprogramms,
wobei die Synchronisation dadurch bestimmt ist, ob ein Frame des gerade wiedergegebenen gespeicherten Rundfunkprogramms ein Frame ist, der zuletzt in dem mobilen Kommunikationsendgerät gespeichert wurde.

## Revendications

1. Procédé de lecture d'un programme de radiodiffusion pour un terminal de communication mobile, ledit procédé comprenant les étapes consistant à :
recevoir (S201), par le terminal de communication mobile, des données incluant un programme de radiodiffusion en temps réel et stocker (S207, S209, S211) le programme de radiodiffusion ;
régler (S205) le terminal de communication mobile pour fonctionner dans un mode de décalage temporel ;
reproduire (S217), dans le mode de décalage temporel, le programme de radiodiffusion stockée dans le terminal de communication mobile ;
commuter (S221), en réponse à un signal de sélection délivré en entrée dans le mode de décalage temporel, la reproduction du programme de radiodiffusion stocké pour la lecture du programme de radiodiffusion reçu en temps réel ; et **caractérisé en ce qu'**il comprend en outre les étapes consistant à :
déterminer (S223) si le programme de radiodiffusion stocké actuellement en cours de reproduction est synchronisé avec le programme de radiodiffusion reçu en temps réel, et
s'il est déterminé que le programme de radiodiffusion stocké actuellement en cours de reproduction est synchronisé avec le programme de radiodiffusion reçu en temps réel, reproduire le programme de radiodiffusion reçu en temps réel, et
s'il est déterminé que le programme de radiodiffusion stocké actuellement en cours de reproduction n'est pas synchronisé avec le programme de radiodiffusion reçu en temps réel, reproduire le programme de radiodiffusion stocké,
dans lequel la synchronisation est déterminée selon si une trame du programme de radiodiffusion stocké actuellement en cours de reproduction est la dernière trame stockée dans le terminal de communication mobile.

2. Procédé selon la revendication précédente, comprenant en outre l'étape consistant à :
reproduire de manière répétée, en réponse à une instruction de répétition délivrée en entrée pendant la reproduction du programme de radiodiffusion stocké, une section du programme de radiodiffusion stocké.

3. Procédé selon la revendication 2, dans lequel l'instruction de répétition comprend la sélection d'un point de début et d'un point de fin de la section du programme de radiodiffusion stocké devant être répétée.

4. Procédé selon l'une quelconque des revendications précédentes, dans lequel le programme de radiodiffusion reçu est stocké (S211) dans une pluralité de sections de stockage prévues dans le terminal de communication mobile.

5. Procédé selon la revendication 4, comprenant en outre l'étape consistant à :
fournir (S213) des index associant les sections de stockage au programme de radiodiffusion stocké dans celles-ci.

6. Procédé selon la revendication 5, comprenant en outre l'étape consistant à :
afficher des informations concernant la pluralité de sections de stockage comportant le programme de radiodiffusion stocké dans celles-ci.

7. Procédé selon la revendication 6, comprenant en outre les étapes consistant à:
sélectionner (S215) une section de stockage et la sauter (S217) pour reproduire le programme de radiodiffusion stocké dans celle-ci.

8. Terminal de communication mobile comprenant :
un module de réception de radiodiffusion (110) adapté pour recevoir des données incluant un programme de radiodiffusion en temps réel ;
un moyen de stockage (130) adapté pour stocker le flux de radiodiffusion reçu en temps réel ;
une unité d'entrée (120) adaptée pour générer un signal de réglage destiné à régler le terminal de communication mobile dans un mode de décalage temporel et au moins un signal de sélection destiné à sélectionner une section du programme de radiodiffusion stocké devant être reproduite ;
un contrôleur (140) destiné à régler le terminal de communication mobile dans le mode de décalage temporel conformément au signal de réglage, et le contrôleur est en outre adapté pour commuter, en réponse à un signal de sélection généré par l'unité d'entrée (120), la reproduction du programme de radiodiffusion stocké pour la lecture du programme de radiodiffusion reçu en temps réel ;
un moyen d'affichage (150) adapté pour reproduire le programme de radiodiffusion stocké dans le terminal de communication mobile ; et
**caractérisé en ce que** le contrôleur (140) est en outre adapté pour déterminer si le programme de radiodiffusion stocké actuellement en cours de reproduction est synchronisé avec le programme de radiodiffusion reçu en temps réel, et
s'il est déterminé que le programme de radiodiffusion stocké actuellement en cours de reproduction est synchronisé avec le programme de radiodiffusion reçu en temps réel, reproduire le programme de radiodiffusion reçu en temps réel, et
s'il est déterminé que le programme de radiodiffusion stocké actuellement en cours de reproduction n'est pas synchronisé avec le programme de radiodiffusion reçu en temps réel, reproduire le programme de radiodiffusion stocké,
dans lequel la synchronisation est déterminée selon si une trame du programme de radiodiffusion stocké actuellement en cours de reproduction est la dernière trame stockée dans le terminal de communication mobile.
